# FASCICULE DE BREVET EUROPEEN

(11) **EP 1 861 285 B1**
(45) Date de publication et mention de la délivrance du brevet: **23.07.2008**
(21) Numéro de dépôt: 05739434.8
(22) Date de dépôt: 11.03.2005
(51) Int. Cl.: B60R 3/00

(54) **MARCHE-PIED POUR VEHICULE**
STUFENANORDNUNG FÜR FAHRZEUG
STEP ASSEMBLY FOR VEHICLE

(43) Date de publication de la demande: 05.12.2007
(73) Titulaire: RENAULT TRUCKS, 69800 St Priest (FR)
(72) Inventeur: SERINE, Jean-Luc, F-69005 LYON (FR); FICHET, Jérôme, ANNONAY, 07100 (FR)
(74) Mandataire: Putet, Gilles
(86) Numéro de dépôt international: PCT/FR2005/050159
(87) Numéro de publication internationale: WO 2006/097585

(56) Documents cités:
- DE-A1- 19 638 819
- GB-A- 2 019 478
- US-A- 3 603 429
- US-A- 3 887 216
- US-A- 4 333 547

## Description

### Domaine technique

L'invention concerne un marche-pied destiné à être monté sur un véhicule, et notamment un véhicule industriel. Elle concerne plus particulièrement les marche-pieds pour véhicules destinés à se déplacer sur des terrains accidentés et pour lesquels les risques de choc avec des obstacles sont importants. Elle vise plus spécifiquement une structure de marche-pied destinée à résister à de tels chocs, tout en conservant une grande stabilité et donc une sécurité pour l'utilisateur.

Dans la suite de la description, l'invention sera décrite en faisant référence plus spécifiquement à des véhicules industriels du type camion, mais elle peut être utilisée dans d'autres types de véhicules tels que les engins de travaux publics par exemple.

### Techniques antérieures

De façon générale, les véhicules destinés à évoluer sur les chantiers possèdent une garde au sol importante, et par conséquent, une cabine dont l'entrée est surélevée par rapport à celles de camions de transport routier. Ils sont donc équipés d'un emmarchement supplémentaire permettant l'accès à la cabine, dont la marche la plus basse doit se trouver suffisamment près du sol pour permettre au chauffeur d'y accéder. La hauteur peut être réglementée, et être voisine d'une hauteur de 700 millimètres.

On conçoit que cette première marche est particulièrement exposée aux chocs occasionnés par la rencontre d'obstacles divers, que peuvent être les branchages, des buttes de terre ou des matériaux reposant sur le sol.

Des solutions ont déjà été proposées pour limiter les risques de dégradation, voire de destruction, de la première marche de l'emmarchement, qui est la plus exposée aux chocs.

Une de ces solutions est décrite dans le document WO 97/24239. Ce document décrit un marche-pied présentant une capacité de déformation. Plus précisément, ce marche-pied comporte une marche horizontale articulée par ses deux côtés à des parois sensiblement verticales. Ces parois verticales sont elles-mêmes articulées par rapport à une structure fixe solidaire du châssis, de sorte que l'ensemble du marche-pied forme un parallélogramme déformable. Ainsi, un choc frontal provoque la déformation du parallélogramme en déplaçant la marche horizontale vers l'arrière.

Le dispositif décrit dans ce document est également équipé de moyens de rappel, générant un couple de torsion au niveau des articulations. Ceci limite la déformation du parallélogramme, lorsque la marche supporte le poids du chauffeur. En effet, on recherche pour le confort du chauffeur lorsqu'il monte ou descend de la cabine, que la marche horizontale ne puisse se déplacer trop librement et être insuffisamment stable.

On conçoit que les articulations d'un tel marche-pied sont sujettes au grippage consécutif à l'évolution dans des terrains fortement chargés en poussières. Par ailleurs, les chocs subis par le marche-pied peuvent provoquer un défaut de parallélisme des liaisons pivots d'articulation. Le marche-pied ne possède alors plus sa capacité de déformation souhaitée, et est donc fragilisé.

D'autres solutions ont été proposées comme celles décrites dans les documents EP-A-0 421 407 et DE-A-196 38 819. Dans ces documents, les parois verticales présentes de chaque côté de la marche possèdent une capacité de déformation élastique. Ainsi, dans le cas d'un choc frontal, la flexibilité du matériau constituant la paroi en permet la déformation.

Toutefois, cette capacité de déformation ne s'exprime que lorsque les chocs sont frontaux, c'est-à-dire lorsqu'ils s'exercent dans une direction située dans le plan vertical contenant la direction de déplacement du véhicule.

En revanche, pour des chocs intervenants latéralement, ou de façon diagonale, par exemple lorsque l'obstacle est de travers, ces solutions ne sont pas satisfaisantes.

En effet, en cas de choc diagonal, la jonction entre les parois verticales et la marche présente une capacité de déformation très limitée, et ne résiste donc pas aux contraintes élevées consécutives à un choc. En d'autres termes, les marche-pieds conçus selon ces principes peuvent être facilement endommagés en cas de choc latéral ou diagonal.

### Exposé de l'invention

Un premier objectif de l'invention est donc de fournir un marche-pied qui présente une capacité de déformation vis-à-vis de chocs tant frontaux que latéraux, diagonaux, ou verticaux ascendants.

Un autre objectif de l'invention est de combiner cette capacité de déformation avec une très grande rigidité vis-à-vis des efforts exercés verticalement vers le bas, notamment pour résister au poids du chauffeur lorsqu'il monte ou descend de sa cabine.

L'invention concerne donc un marche-pied pour véhicules, notamment véhicules industriels. De façon connue, ce marche-pied comporte une marche horizontale, qui est reliée sur ses deux côtés à des parois élastiquement déformables, sensiblement verticales. Ces deux parois verticales sont aptes à être solidarisées au véhicule par leurs extrémités supérieures.

Conformément à l'invention, ces parois latérales présentent, dans un plan parallèle à la marche, une forme bombée vers l'extérieur. Autrement dit, contrairement à l'Art antérieur, les parois latérales ne sont pas planes, mais à l'inverse cintrées, de telle sorte qu'elles présentent vers l'extérieur une face convexe.

Grâce à cette forme bombée, la déformation de la paroi peut s'obtenir pour une plus grande variété d'angles de choc. En effet, pour les chocs frontaux, la déformation de la paroi intervient lorsque l'effort subi dépasse un certain niveau, nécessaire pour annuler la courbure initiale.

Cette résistance confère donc une bonne stabilité à la marche, pour les niveaux d'efforts correspondants au poids du chauffeur. Toutefois, lorsque les efforts subis sont d'une intensité élevée, et correspondent donc à des chocs, les parois latérales se déforment élastiquement.

La forme bombée caractéristique présente également l'avantage de permettre la déformation pour des angles de choc non plus frontaux, mais également diagonaux, voire latéraux, ou bien même verticaux ascendants. En effet, dans ce cas, la forme bombée permet un travail en torsion et en flambage, et évite donc l'arrachement du marche-pied que l'on observe avec les solutions de l'Art antérieur.

Toutes proportions gardées, la déformation des parois peut être assimilable à celle d'un mètre-ruban métallique, qui présente une certaine rigidité pour des déformations dans son plan de symétrie contrariant sa courbure, et une plus grande souplesse quasi immédiate pour la déformation en torsion et en flexion.

L'aptitude à la déformation et la rigidité nécessaire pour la stabilité peuvent être encore améliorées par des dispositions constructives des parois et du reste du marche-pied. Ainsi, avantageusement, les parois latérales peuvent présenter une épaisseur plus élevée dans leur partie basse que dans leur partie haute. Le choix de la progression de l'épaisseur permet d'optimiser la déformation de la paroi vis-à-vis des chocs frontaux.

Ainsi, en pratique, les parois latérales peuvent présenter une épaisseur quasi constante dans leur partie haute. Complémentairement, dans leur partie basse, les parois peuvent présenter une épaisseur qui croît globalement en se rapprochant de la marche. Autrement dit, un gradient d'épaisseur rigidifie le bas de la paroi, forçant ainsi la déformation à un niveau intermédiaire de la paroi.

En pratique, les parois latérales peuvent comporter au niveau de leurs extrémités supérieures des logements ouverts vers le châssis de la cabine, aptes à recevoir par emmanchement des bras rigides de support solidaires du véhicule. Autrement dit, le marche-pied conforme à l'invention peut être enfiché dans une fourche rigide, solidaire du châssis de la cabine.

En pratique, ces logements présentent avantageusement une section allongée verticalement, pour éviter tout glissement du bras rigide à l'intérieur du logement, et au contraire maintenir fermement la partie haute des parois latérales.

Dans le but d'améliorer la résistance du marche-pied aux efforts verticaux, on peut avantageusement prévoir qu'un élément de renfort interne s'étende continûment d'une paroi latérale à l'autre, en traversant la marche horizontale, en étant noyé dans cette dernière. Ce renfort interne, qui peut être formé par une sangle textile ou assimilé, peut avantageusement former une boucle ceinturant le logement destiné à l'emmanchement des bras rigides de support, pour améliorer la résistance aux efforts verticaux.

### Description sommaire des figures

La manière de réaliser l'invention ainsi que les avantages qui en découlent ressortiront bien de la description des modes de réalisation qui suivent à l'appui des figures annexées dans lesquelles :
La figure 1 est une vue en perspective sommaire, de trois quarts dessus d'un marche-pied conforme à l'invention.
La figure 2 est une vue de face du marche-pied de la figure 1 dans laquelle la paroi latérale de droite est montée en section.
La figure 3 est une vue de gauche du marche-pied de la figure 1.
La figure 4 est une vue de dessus du marche-pied de la figure 1 dans laquelle la paroi latérale dé droite est montrée en section.
Les figures 5 et 6 sont des vues de trois quarts dessous du marche-pied de la figure 1, montrées respectivement dans un état de repos et dans un état de déformation.

### Manière de réaliser l'invention

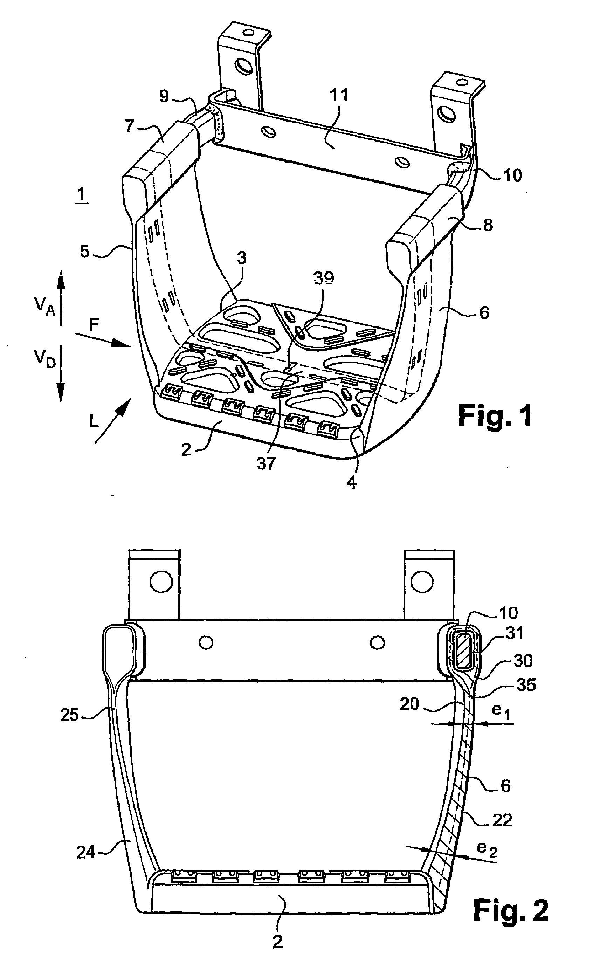

Le marche-pied (1) conforme à l'invention illustré à la figure 1 comporte de façon principale une marche globalement horizontale (2) dont les bordures avant (3) et arrière (4) sont reliées à des parois latérales (5, 6) sensiblement verticales. Ces parois latérales (5, 6) présentent chacune en partie haute un fourreau (7, 8) destiné à être emmanché sur une fourche comportant deux bras (9, 10) solidaires d'un support (11) lui-même monté sur la structure du châssis (non représenté).

Plus précisément, la marche horizontale (2) présente un certain nombre d'évidements destinés à l'alléger, à évacuer l'eau et la boue, ainsi que des motifs en relief destinés à la rendre anti-dérapante.

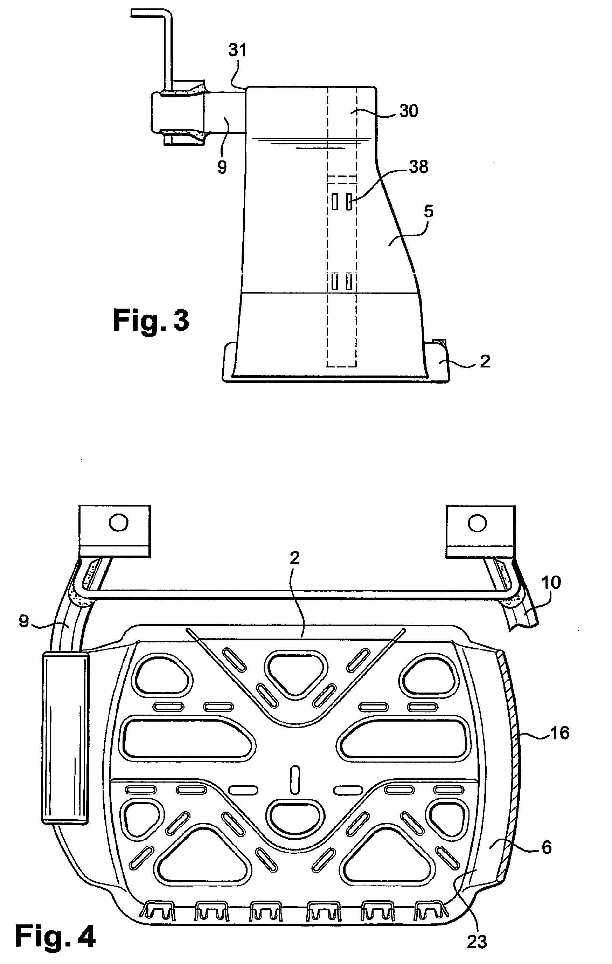

Conformément à l'invention, les parois latérales (5, 6) présentent chacune une forme bombée vers l'extérieur. Par "extérieur", on entend l'extérieur du volume défini entre les parois caractéristiques. Ainsi, la figure 4 illustre la paroi latérale droite du marche-pied de la figure 1, orientée vers l'arrière du véhicule, qui est partiellement coupée par un plan horizontal. On observe que cette paroi latérale (6) est courbée, de telle sorte que sa face extérieure est convexe.

De plus, à proximité de son extrémité supérieure (8), la paroi latérale (6) présente une courbure faible, quasi nulle, et correspondant sensiblement à la direction du bras (10) de support. En revanche, dans sa partie basse (22), la courbure dans un plan horizontal de la paroi (6) est plus marquée, puisque cette dernière rejoint le bord latéral (23) de la marche (2), qui est lui-même de forme courbe. Ainsi, la courbure de la paroi est d'autant plus marquée qu'elle est évaluée à proximité de la marche horizontale (2).

En revanche, la courbure des parois latérales (6), mesurée dans un plan vertical, tel qu'illustré à la figure 2, est beaucoup moins marquée, pour donner à la paroi latérale (6) une forme générale de tuile ou de gouttière dont le comportement mécanique en déformation est particulièrement avantageux dans le cadre de l'invention.

Plus précisément, et comme illustré à la figure 2, la paroi latérale (6) présente dans sa partie haute (20) une épaisseur (e₁) qui est sensiblement constante, et inférieure à l'épaisseur (e₂) mesurée dans la partie basse (22) de la paroi (6). L'épaisseur (e₂) mesurée dans la partie basse (22) est variable, et croît globalement en se dirigeant vers la marche (2).

A titre d'exemple, l'épaisseur (e₁) mesurée dans la partie haute (20) peut être de l'ordre de 5 millimètres environ, pour croître de manière continue jusqu'à une valeur de l'ordre de 14 millimètres dans la partie basse. Bien entendu, ces valeurs sont données à titre indicatif, et peuvent être adaptées en fonction de la résistance souhaitée, du matériau choisi et de la courbure donnée aux parois latérales. A cet égard, on peut utiliser des matériaux du type polyuréthane ou polypropylène, en combinaison avec des matériaux élastomériques.

On observe à la figure 2 que les parois latérales (5, 6) sont légèrement inclinées verticalement vers le bas et vers l'intérieur, pour faciliter leurs déformations. Les déformations peuvent être mesurées selon trois axes, comme illustré à la figure 1. Ainsi, le marche-pied doit présenter une bonne capacité de déformation en cas de choc frontal, c'est-à-dire selon la flèche F. Le marche-pied doit également présenter une capacité de déformation en cas de choc diagonal, c'est-à-dire engendrant un effort présentant une composante latérale, selon la flèche L et une composante frontale selon la flèche F. Le marche-pied doit également pouvoir se déformer suite à des chocs verticaux ascendants, selon la flèche VA.

En revanche, le marche-pied peut présenter une très grande résistance à la déformation vis-à-vis des efforts verticaux descendants selon la flèche VD, et notamment pour supporter le poids exercé par le chauffeur lors des montées et descentes de la cabine.

Comme illustré à la figure 3, les parois latérales (5) du marche-pied présentent une forme sensiblement trapézoïdale, dont la base est plus large que le sommet, et ce, pour permettre à la marche (2) d'être proéminente. Ceci est rendu nécessaire par le fait que le support (11) est généralement fixé sur la structure du châssis, de manière décalée vers le centre du véhicule par rapport aux marches fixes (non représentées).

Comme illustré à la figure 2, le bord supérieur de la paroi latérale (6) comporte une zone renflée définissant un logement (31) apte à recevoir par emmanchement le bras (10) du support (11). On remarquera que le bras (10) présente une section sensiblement allongée verticalement, pour éviter tout mouvement de pivotement de la partie renflée (40) autour du bras (10). Des ergots (non représentés) présents sur le bras (10) peuvent coopérer avec la matière constitutive de la partie renflée (40), pour éviter toute rotation de la marche autour du bras (10).

Conformément à une caractéristique de l'invention, le marche-pied comporte un élément de renfort (30). Cet élément de renfort peut être constitué d'une sangle textile, par exemple en polyester, similaire à celles employées pour la réalisation des ceintures de sécurité. Cette sangle (30) est noyée à l'intérieur de la matière constituant les parois latérales (5, 6) et la marche (2). Comme illustré à la figure 2, cette sangle (30) s'étend depuis la partie haute (20) de la paroi latérale (6) en faisant le tour du logement (31) recevant les bras (11) en formant une boucle (33). Cette sangle (30) peut être cousue sur elle-même pour former une boucle fermée (33). Comme illustré à la figure 1, cette sangle (30) se prolonge verticalement à l'intérieur de la matière de la paroi (6), est noyée dans la partie centrale (37) de la marche (2), et remonte dans la paroi latérale opposée (5) en formant également une boucle autour du bras de support (9).

Pour assurer un bon ancrage de la sangle (30) à l'intérieur de la matière constitutive du marche-pied, des points de compression et de positionnement (38, 39) peuvent être réalisés dans les parois latérales (5, 6) et dans la marche (2).

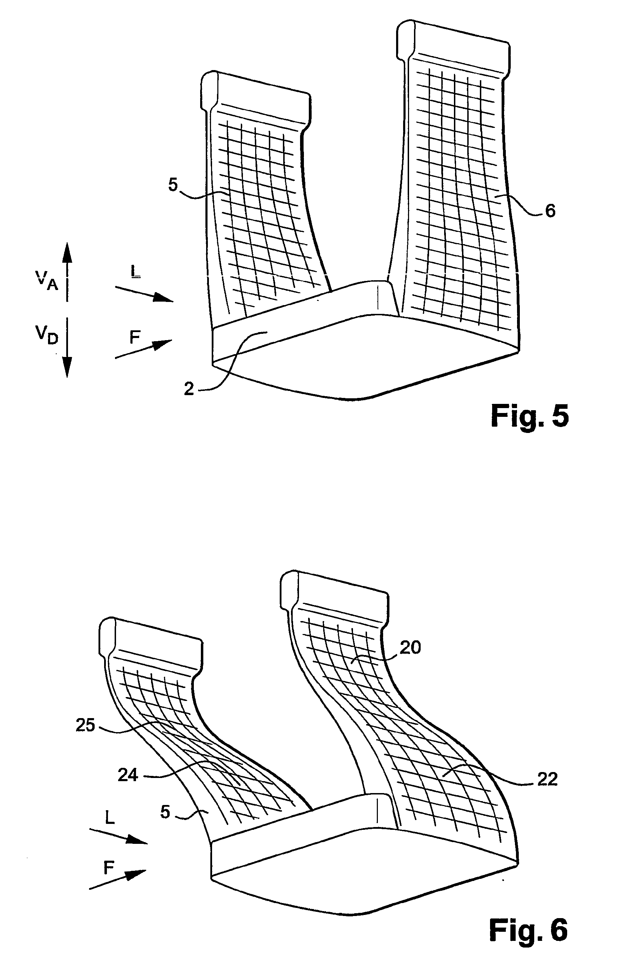

Les figures 5 et 6 illustrent la déformation du marche-pied (1), lorsqu'il est sollicité par un choc sensiblement diagonal, c'est-à-dire provoquant un effort comportant une composante frontale selon la flèche F, et une composante latérale selon la flèche L.

Ainsi, on constate que la courbure de la partie basse (24) de la paroi (5) subissant le choc frontal est sensiblement annulée, et que cette paroi se déforme de manière à présenter un point d'inflexion sensiblement dans sa partie centrale (25). De cette manière, les parois présentent une géométrie qui leur permet d'autoriser un mouvement de la marche (2) dans le sens d'un déplacement latéral, selon la flèche L, et ainsi de résister à un choc diagonal.

Le choix des matériaux ainsi que des épaisseurs et des courbures sont réalisées pour que le matériau reste dans son domaine de déformation élastique. En effet, il importe d'éviter l'apparition de phénomènes irréversibles, qui empêcheraient le retour du marche-pied dans sa position de repos, après une déformation plastique.

Il ressort de ce qui précède que le marche-pied présente de multiples avantages, et notamment celui de présenter une capacité de déformation suite à des chocs frontaux mais également latéraux et verticaux ascendants, et ce tout en conservant une forte rigidité vis-à-vis des efforts verticaux descendants.

## Revendications

1. Marche-pied (1) pour véhicules notamment véhicules industriels, comportant une marche horizontale (2) reliée sur ses deux côtés à des parois latérales (5, 6) élastiquement déformables sensiblement verticales, dont les extrémités supérieures (7, 8) sont aptes à être solidarisées au véhicule, **caractérisé en ce que** lesdites parois latérales (5, 6) présentent, dans un plan parallèle à la marche (2), une forme bombée vers l'extérieur.

2. Marche-pied selon la revendication 1, **caractérisé en ce que** les parois latérales (6) présentent une épaisseur (e₂) plus élevée dans leur partie basse (22) que dans leur partie haute (20).

3. Marche-pied selon la revendication 2, **caractérisé en ce que** les parois latérales (6) présentent une épaisseur (e₁) quasi constante dans leur partie haute (20).

4. Marche-pied selon la revendication 2, **caractérisé en ce que** les parois latérales (6) présentent, dans leur partie basse (22), une épaisseur (e₂) qui croît en se rapprochant de la marche (2).

5. Marche-pied selon la revendication 1, **caractérisé en ce que** les parois latérales (6) comportent au niveau de leurs extrémités supérieures des logements (31), aptes à recevoir par emmanchement des bras rigides (10) de supports solidaires du véhicule.

6. Marche-pied selon la revendication 5, **caractérisé en ce que** les logements (31) présentent une section allongée verticalement.

7. Marche-pied selon la revendication 6, **caractérisé en ce qu'**il comporte un élément de renfort interne (30) s'étendant continûment d'une paroi latérale (5) à l'autre (6) en traversant la marche (2).

8. Marche-pied selon la revendication 7, **caractérisé en ce que** l'élément de renfort interne possède une boucle (33) ceinturant le logement (31) destiné à l'emmanchement des bras rigides de support (10).

## Claims

1. Step assembly (1) for vehicles, in particular industrial vehicles, comprising a horizontal step (2) connected on both its sides to substantially vertical elastically deformable side walls (5, 6) whose upper ends (7, 8) are adapted to be secured to the vehicle, **characterized in that** the said side walls (5, 6) have, in a plane parallel to the step (2), an outwardly convex shape.

2. Step assembly according to Claim 1, **characterized in that** the side walls (6) have a thickness (e₂) which is more pronounced in their bottom section (22) than in their top section (20).

3. Step assembly according to Claim 2, **characterized in that** the side walls (6) have a thickness (e₁) which is virtually constant in their top section (20).

4. Step assembly according to Claim 2, **characterized in that** the side walls (6) have, in their bottom section (22), a thickness (e₂) which increases as they approach the step (2).

5. Step assembly according to Claim 1, **characterized in that** the side walls (6) are provided at their upper ends with receptacles (31) adapted to accommodate, with a push fit, rigid support arms (10) secured to the vehicle.

6. Step assembly according to Claim 5, **characterized in that** the receptacles (31) have a vertically elongated cross section.

7. Step assembly according to Claim 6, **characterized in that** it comprises an internal reinforcement element (30) extending continuously from one side wall (5) to the other (6) while crossing through the step (2).

8. Step assembly according to Claim 7, **characterized in that** the internal reinforcing element has a looping portion (33) encircling the receptacle (31) intended for the push-fit insertion of the rigid support arms (10).

## Patentansprüche

1. Trittstufe (1) für Fahrzeuge, insbesondere für Nutzfahrzeuge, mit einer horizontalen Stufe (2), die an ihren beiden Seiten mit elastisch verformbaren, im Wesentlichen vertikalen Seitenwänden (5, 6) verbunden ist, deren obere Enden (7, 8) mit dem Fahrzeug fest verbindbar sind, **dadurch gekennzeichnet, dass** die Seitenwände (5, 6) in einer zur Stufe (2) parallelen Ebene eine nach außen gewölbte Form aufweisen.

2. Trittstufe nach Anspruch 1, **dadurch gekennzeichnet, dass** die Seitenwände (6) in ihrem unteren Teil (22) eine größere Dicke (e₂) haben als in ihrem oberen Teil (20).

3. Trittstufe nach Anspruch 2, **dadurch gekennzeichnet, dass** die Seitenwände (6) in ihrem oberen Teil (20) eine quasi konstante Dicke (e₁) haben.

4. Trittstufe nach Anspruch 2, **dadurch gekennzeichnet, dass** die Seitenwände (6) in ihrem unteren Teil (22) eine Dicke (e₂) haben, die zunimmt, wenn sie sich der Stufe (2) annähert.

5. Trittstufe nach Anspruch 1, **dadurch gekennzeichnet, dass** die Seitenwände (6) im Bereich ihrer oberen Enden Aufnahmen (31) aufweisen, die mit dem Fahrzeug fest verbundene starre Trägerarme (10) durch eine Steckverbindung aufnehmen können.

6. Trittstufe nach Anspruch 5, **dadurch gekennzeichnet, dass** die Aufnahmen (31) einen vertikal länglichen Querschnitt aufweisen.

7. Trittstufe nach Anspruch 6, **dadurch gekennzeichnet, dass** sie ein inneres Verstärkungselement (30) umfasst, das sich kontinuierlich von einer Seitenwand (5) zur anderen (6) erstreckt und dabei die Stufe (2) durchquert.

8. Trittstufe nach Anspruch 7, **dadurch gekennzeichnet, dass** das innere Verstärkungselement eine Schlaufe (33) aufweist, die die zum Einstecken der starren Trägerarme (10) bestimmte Aufnahme (31) umgibt.
